# EUROPEAN PATENT APPLICATION

(11) **EP 4 621 970 A1**
(43) Date of publication of application: **24.09.2025**
(21) Application number: 24164597.7
(22) Date of filing: 19.03.2024
(51) Int. Cl.: H01M 50/383

(54) **BATTERY MODULE COMPRISING A THERMAL RUNAWAY REACTION INHIBITOR**

(71) Applicant: VOLVO TRUCK CORPORATION, 405 08 Göteborg (SE)
(72) Inventor: DUBEY, Satya Prakash, 560100 BANGALORE (IN); KSHATRI, Vrishank, 110034 NEW DELHI (IN)
(74) Representative: Kransell & Wennborg KB

(57) **Abstract**

The present disclosure relates to a battery module (1) comprising a cell stack (2), the cell stack comprising two or more stacked battery cells (4), the two or more battery cells comprising a first side (5) and a second side (6), the two or more battery cells comprising a venting area and/or a cell tab (8) on the respective first side, the cell stack being provided with a thermal suppressant liner (9) arranged to cover the venting area or the cell tabs on the respective first side of the battery cells, wherein the thermal suppressant liner comprises a thermal runaway reaction inhibitor embedded in a liner material.

## Description

### TECHNICAL FIELD

The disclosure relates generally to a batter module for a vehicle. In particular aspects, the disclosure relates to a battery module comprising a thermal runaway reaction inhibitor. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage systems, often in the form of traction batteries, need to be relatively large in size to be able to contain a sufficient level of energy such that the vehicles can be operated at an acceptable range using the electric traction motors.

Thermal runaway is a phenomenon which may affect rechargeable energy storage systems, and which may in particular be critical to those which are relatively large in size. This condition may occur should the temperature rapidly increase inside one of the battery cells, subsequently entering an uncontrollable, self-heating state. Thermal runaway may result in ejection of gas, extremely high temperatures, smoke and fire.

For vehicles provided with rechargeable energy storage systems there is therefore a need to increase the safety and reduce the risks of such systems, both in terms of protection of the vehicle and for the surrounding environment.

### SUMMARY

According to a first aspect of the disclosure, there is provided a battery module comprising a cell stack, the cell stack comprising two or more stacked battery cells, the two or more battery cells comprising a first side and a second side, the two or more battery cells comprising a venting area and/or a cell tab on the respective first side, the cell stack being provided with a thermal suppressant liner arranged to cover the venting area or the cell tabs on the respective first side of the two or more battery cells, wherein the thermal suppressant liner comprises a thermal runaway reaction inhibitor embedded in a liner material.

In an extreme situation of thermal runaway reaction in one or more of the battery cells the temperature inside the battery cell(s) starts increasing and when it reaches a certain point that causes a chemical reaction to occur, this chemical reaction causes even more heat, which drives the temperature higher, causing further chemical reaction which in turn creates more heat resulting in the release of flammable gas. These flammable gases may be ignited by the battery's high temperature. In addition to the combustion of these gases as they vent, another concern is the accumulation and potential explosion of the gases.

Thermal runaway (TR) may occur when a cell has reached a temperature at which the temperature will continue to increase on its own and it becomes self-sustaining as it creates oxygen.

The first aspect of the disclosure may seek to mitigate the problems of TR and subsequent thermal propagation between battery cells. A technical benefit may include that the liner material filled with the thermal runaway reaction inhibitor extends over the battery cells tab/venting area and upon occurrence/detection of TR, the liner will rupture resulting in the release of the reaction inhibitor to suppress the heat and break the chain reaction thereby restricting the damage to the affected area of the battery module and thus preventing any further damage to the battery pack.

A "thermal runaway reaction inhibitor" as disclosed herein is a chemical compound that chemically interferes with and suppresses thermal runaway.

According to the present disclosure, the liner is arranged over the battery tab, or terminals, being the positive and negative connectors that carry the cell's electrical current. The battery tabs exit the cell casings, thereby allowing the cell's energy to be transferred to an external source. Alternatively, or additionally, the liner is arranged over the venting area, a venting area is typically involving a structurally weak point, such as a pressure-release valve, in the respective battery cell that allows an opening to occur upon conditions that might lead to or indicate the occurrence of thermal runaway.

Optionally in some examples, including in at least one preferred example, each of the battery cells in the battery stack comprises a venting area and/or a cell tab on the respective first side.

The first side of the battery cells in the battery stacks refers to a side constituting a common first side of the battery stack, i.e. facing the same direction.

Optionally in some examples, including in at least one preferred example, the liner material covers each of the battery cells in the battery stack. A technical benefit may include an improved protection of the battery module against TR. Since each one of the battery cells in the battery stack is covered by the liner material, a faster and more precise activation of the thermal runaway reaction inhibitor is provided.

Optionally in some examples, including in at least one preferred example, the battery cells are Lithium-ion cells.

Optionally in some examples, including in at least one preferred example, the thermal runaway reaction inhibitor is an oxygen binding suppressor, which thus chemically reacts with oxygen. A technical benefit may include that the binding of oxygen will suppress the heat and potential fire caused by the TR and thereby break the chain reaction to prevent a potential total loss of the battery pack and also potentially the vehicle.

Optionally in some examples, including in at least one preferred example, the thermal runaway reaction inhibitor has an activation temperature within the range of from 155 to 185°C. A technical benefit may include that the chain reaction which may lead to TR may be broken prior to TR at around 200°C.

Optionally in some examples, including in at least one preferred example, the thermal runaway reaction inhibitor is in powder form. A technical benefit may include a facilitated dispersion within the liner material and an increased contact surface of the thermal runaway reaction inhibitor.

Optionally in some examples, including in at least one preferred example, the thermal runaway reaction inhibitor are any one of a silica-trifluoroacetyl powder, a powder of Mg(OH)₂, a bicarbonate powder and/or sodium sulfite powder. A technical benefit may include an improved suppression of the chain reaction prior to TR. Each of these thermal runaway reaction inhibitor binds and reacts with oxygen, thereby removing oxygen which is required to sustain propagation of a flame. A further benefit is that the activation temperatures of these thermal runaway reaction inhibitors are relatively low, i.e. from around 160°C to 180°C, which is below a temperature at which the chain reaction of the TR may be irreversible.

Optionally in some examples, including in at least one preferred example, the liner material comprises a first layer and a second layer wherein the thermal runaway reaction inhibitor is arranged between the first and the second layer. A technical benefit may include an improved protection of the thermal runaway reaction inhibitor prior to activation and thereby maintained or improved TR inhibition.

Optionally in some examples, including in at least one preferred example, the liner material has a melting temperature of from 140°C, optionally within the range of from 140°C to 185°C. With this is meant that at least part, such as from 40 wt.%, or from 50 wt.%, of the liner material comprises a material, such as a polymer material, which melts at 140°C or higher, optionally within the range of from 140°C to 185°C. A technical benefit may include that the liner material ruptures and releases the thermal runaway reaction inhibitor prior to temperatures where the chain reaction of the TR is irreversible.

Optionally in some examples, including in at least one preferred example, the liner material is a continuous liner material extending over the two or more of the stacked battery cells in the cell stack. A technical benefit may include an improved protection of the stacked battery cells against TR and restriction of the TR within the battery module.

Optionally in some examples, including in at least one preferred example, the battery cells are prismatic battery cells.

Optionally in some examples, including in at least one preferred example, the battery cells are cylindrical battery cells.

Optionally in some examples, including in at least one preferred example, the liner material is a nonwoven material or a woven material. A technical benefit may include that both nonwoven and woven materials provide a structured surface for embedding the thermal runaway reaction inhibitor and maintaining an even distribution of the thermal runaway reaction inhibitor within the liner material.

Optionally in some examples, including in at least one preferred example, the cell stack may be arranged in a housing.

Optionally in some examples, including in at least one preferred example, the liner material is arranged between the housing and the venting area and/or cell tab on the respective first side of the battery cells. A technical benefit may include that the liner material and thus the thermal runaway reaction inhibitor is in close contact with the venting areas or the cell tabs of the battery cells that the release of the thermal runaway reaction inhibitor directly is provided to the affected battery cell.

Optionally in some examples, including in at least one preferred example the liner material covers both the venting area and the cell tab(s) of the two or more, or each, battery cell of the cell stack. A technical benefit may include a further improved protection of the battery module against TR.

Optionally in some examples, including in at least one preferred example, a thermal control plate is arranged to abut the second side of the respective second side of the battery cells. A technical benefit may include that the temperature rise may be further prevented by means of the thermal control plate.

Optionally in some examples, including in at least one preferred example, the thermal control plate is a liquid thermal control plate, such as a liquid cooling plate.

Optionally in some examples, including in at least one preferred example, the liner material is affixed to the cell stack. A technical benefit may include that a close contact between the liner material and the venting areas or the cell tabs of the battery cells is maintained over time.

According to a second aspect of the disclosure, an electrical propulsion system comprising an electrical machine and a battery module according to the first aspect is provided. The second aspect of the disclosure may seek to mitigate the problems of TR and subsequent thermal propagation between battery cells in an electrical propulsion system comprising a battery module according to the first aspect. A technical benefit may include that the liner material filled with the thermal runaway reaction inhibitor run along the length of the module/cell surfaces' cylindrical or prismatic cell tab/venting area and when there is an occurrence/detection of the TR then the liner will rupture resulting in the release of the reaction inhibitor to suppress the heat and break the chain reaction.

According to a third aspect of the disclosure, a vehicle comprising a battery stack according to the first aspect or an electrical propulsion system according to the second aspect is provided. The third aspect of the disclosure may seek to mitigate the problems of TR and subsequent thermal propagation between battery cells in a vehicle comprising a battery module according to the first aspect. A technical benefit may include that the liner material filled with the thermal runaway reaction inhibitor extends over the length of the module/cell surfaces' cylindrical or prismatic cell tab/venting area and when there is an occurrence/detection of the TR then the liner will rupture resulting in the release of the reaction inhibitor to suppress the heat and break the chain reaction.

According to a fourth aspect of the disclosure, a stationary energy storing system comprising a battery module according to the first aspect is provided. The fourth aspect of the disclosure may seek to mitigate the problems of TR and subsequent thermal propagation between battery cells in a stationary energy storing system comprising a battery module according to the first aspect. A technical benefit may include that the liner material filled with the thermal runaway reaction inhibitor extends over the battery cells tab/venting area and upon occurrence/detection of TR, the liner will rupture resulting in the release of the reaction inhibitor to suppress the heat and break the chain reaction thereby restricting the damage to the affected area of the battery module and thus preventing any further damage to the battery pack

According to a fifth aspect of the disclosure, a marine vessel comprising a battery module according to the first aspect is provided. The fifth aspect of the disclosure may seek to mitigate the problems of TR and subsequent thermal propagation between battery cells in a marine vessel comprising a battery module according to the first aspect. A technical benefit may include that the liner material filled with the thermal runaway reaction inhibitor extends over the battery cells tab/venting area and upon occurrence/detection of TR, the liner will rupture resulting in the release of the reaction inhibitor to suppress the heat and break the chain reaction thereby restricting the damage to the affected area of the battery module and thus preventing any further damage to the battery pack.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIGS. 2a and 2b** are exemplary battery modules according to examples, and
**FIG. 3** illustrates an alternative exemplary battery module according to examples.

### DETAILED DESCRIPTION

The detailed description set forth below provides information and examples of the disclosed technology with sufficient detail to enable those skilled in the art to practice the disclosure.

The following disclosure aims at minimizing the problems of battery modules linked to thermal runaway by means of an improved and effective solution. The fact that the cell stack is provided with a thermal suppressant liner arranged to cover the venting area or the cell tabs on the respective first side of two or more battery cells provides the thermal runaway reaction inhibitor in close contact with the venting areas or the cell tabs of the battery cells, such that the release of the thermal runaway reaction inhibitor directly is provided to the affected battery cell.

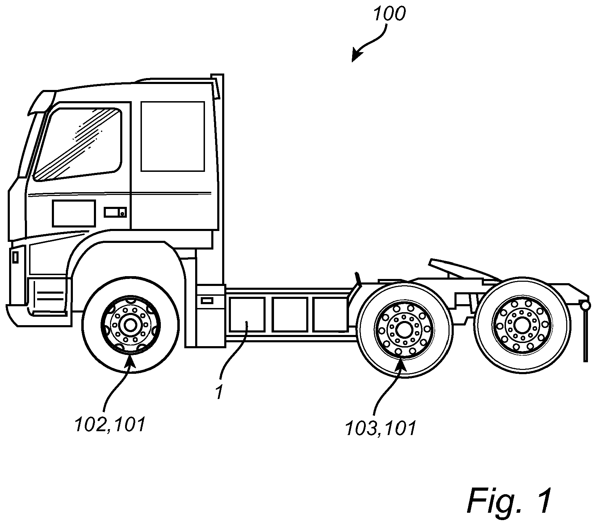

Turning to Fig. 1, which is an illustration of a vehicle 100 according to an example. The exemplified vehicle 100 is configured to be at least partly propelled by one or more electric traction motors 101. In Fig. 1, the electric traction motors 101 are exemplified as wheel hub motors connected to the pair of front wheels 102 as well as to the foremost pair of rear wheels 103. However, the vehicle 100 may alternatively comprise a single electric traction motor connected to the wheels via a conventional propulsion shaft (not shown). The at least one electric traction motor 101 is configured to apply a propulsive power to the wheels of the vehicle during propulsion, and to generate electric power during braking.

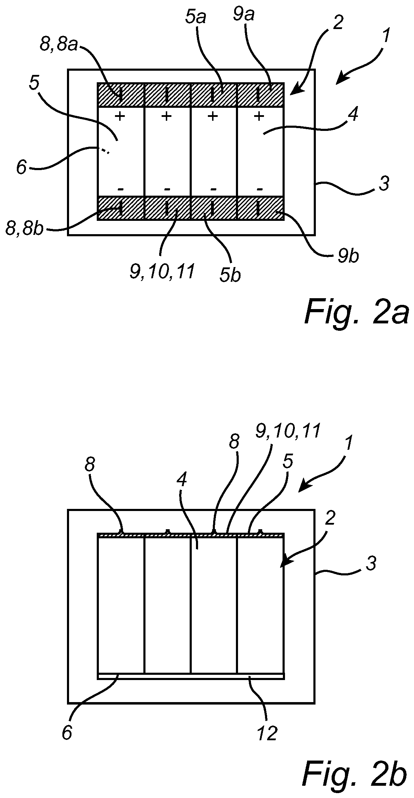

The vehicle further comprises one or more battery module(s) 1, also referred to as a high-voltage vehicle battery. The battery module 1 is configured to feed electric power to the electric traction motor 101 during propulsion of the vehicle 100 and to receive electric power during braking. To further describe the battery module 1, reference is now made to Fig. 2.

Figs. 2a and 2b illustrate a battery module 1 according to an example. The battery module 1 illustrated in Figs. 2a and 2b comprises a cell stack 2 and a housing 3. The cell stack 2 comprises stacked battery cells 4. In an exemplary embodiment the battery cells 4 are Li-ion battery cells. The battery cells 4 comprises a first side 5 and a second side 6, the first side 5 may be an upper side or a lateral side of the battery cells 4, preferably, the first side 5 is the upper side. The battery cells furthermore comprise cell tabs 8 on the respective first side 5 of the battery cells 4. In Figs. 2a and 2b, the battery cells 4 respectively comprises a first and a second cell tab 8a,8b, such as a cathode tab and an anode tab, arranged at opposing edge regions 5a,5b of the first side 5. The battery module 1 comprises a thermal suppressant liner 9 arranged over the cell tabs 8, in this exemplary figures 2a and 2b, the battery cells comprise a first and a second cell tab 8a,8b and the battery module 1 comprises a first and a second thermal suppressant liner 9a,9b arranged over the respective first and second cell tabs 8a,8b. The thermal suppressant liner 9,9a,9b comprises a thermal runaway reaction inhibitor 10 in powder form embedded in a liner material 11. The thermal suppressant liner may be affixed to the cell stack 2.

The thermal runaway reaction inhibitor 10 may be an oxygen binding suppressor. Undesired reactions leading to thermal runaway may be initiated by an external cause such as a local temperature rise. If the battery temperature increases to above around 90°C, the exothermic breakdown of the solid electrolyte interphase (SEI) formed on the anode may further increase the temperature to above about 120°C. Meanwhile, the SEI breakdown may trigger side reactions between the unprotected anode and the electrolyte, potentially leading to formation of combustible gases such as ethane and methane. At this point the separator may melt down, which potentially may cause a short circuit between the positive and negative electrodes that rapidly may increase the temperature and expand the area of heat dissipation in the battery. Finally, at above 150 °C the oxide cathode material may decompose and potentially release a large amount of oxygen which may ignite the flammable electrolyte/combustible gases in presence of the accumulated heat and furthermore potentially trigger the thermal runaway of the battery. Hence, a technical benefit of the runaway reaction inhibitor 10 being an oxygen binding suppressor may be that the reaction may be prevented prior to ignition of the battery cell and potentially ignition of the entire battery pack.

Thermal runaway reaction inhibitor 10 may be activated at a temperature within the range of from 155 to 185°C. A technical benefit is that this may enable activation of the thermal runaway inhibitor prior to ignition of the battery cell and consequently the entire battery pack and thus preventing thermal runaway rather than acting on the thermal runaway reaction as it occurs. Preferred examples of thermal runaway reaction inhibitors 10 are any one of a silica-trifluoroacetyl powder, a powder of Mg(OH)₂, a bicarbonate powder and/or Sodium sulfite.

The liner material 11 may have a melting temperature of 140°C or above and may for example comprise a nonwoven or woven material for instance made of polymer material or a mix of polymer material and cellulose, wherein the polymer material may be a polymer having a melting temperature of 140°C or above. Optionally, the liner material 11 has a melting temperature ±10°C of the activation temperature of the thermal runaway reaction inhibitor.

In the example disclosed in Figs. 2a and 2b, the liner material 11 is a continuous liner material extending over each one of the stacked battery cells 4 in the cell stack 2. However, the liner material 11 may at least extend over two or more of the battery cells. The battery cells 4 disclosed are prismatic battery cells, however, the battery cells may equally for instance be cylindrical battery cells.

As illustrated in Fig. 2b, the battery cells 4 may be arranged on a thermal control plate 12. The battery cells 4 face the thermal control plate on a second side 5 thereof, such that the second side 6 of the respective battery cells 4 abuts the thermal control plate 12. The thermal control plate may be a liquid thermal control plate, such as a liquid cooling plate. It should however be noted that the thermal control plate 12 is an optional feature of the present disclosure.

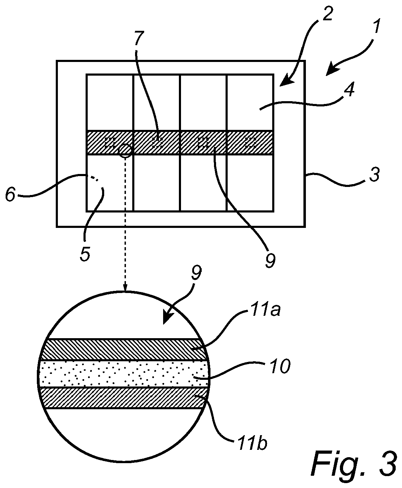

Fig. 3 is a schematic illustration of an alternative embodiment of a battery module 1 according to an example. The battery module 1 illustrated in Fig. 3 comprises a cell stack 2 and a housing 3. The cell stack 2 comprises stacked battery cells 4. In an exemplary embodiment the battery cells 4 are Li-ion battery cells. The battery cells 4 respectively comprises a first side 5 and a second side 6, the first side 5 may be an upper side or a lateral side of the battery cells 4, preferably the first side 5 is the upper side, i.e. as seen when the battery module is installed in a vehicle or the like. The battery cells 4 furthermore comprise a respective venting area 7 on the respective first side 5 of the battery cells 4. The respective venting area 7 of the battery cells 4 may for example comprise a pressure release valve. The battery module 1 furthermore comprises a thermal suppressant liner 9 arranged over the venting areas 7. The thermal suppressant liner 9 comprises a thermal runaway reaction inhibitor 10 in powder form embedded in a liner material 11. Optionally, the thermal suppressant liner is affixed to the cell stack 2.

### EXAMPLE LIST

Example 1: A battery module comprising a cell stack, the cell stack comprising two or more stacked battery cells, the two or more battery cells comprising a first side and a second side, the two or more battery cells comprising a venting area and/or a cell tab on the respective first side, the cell stack being provided with a thermal suppressant liner arranged to cover the venting area or the cell tabs on the respective first side of the two or more battery cells, wherein the thermal suppressant liner comprises a thermal runaway reaction inhibitor embedded in a liner material.

Example 2: The battery module according to example 1, wherein the thermal runaway reaction inhibitor is an oxygen binding suppressor.

Example 3: The battery module according to example 1 or 2, wherein the thermal runaway reaction inhibitor has an activation temperature within the range of from 155 to 185°C.

Example 4: The battery module according to any one of examples 1 - 3, wherein the thermal runaway reaction inhibitor is in powder form.

Example 5: The battery module according to any one of the preceding examples, wherein the thermal runaway reaction inhibitor are any one of a silica-trifluoroacetyl powder, a powder of Mg(OH)₂, a bicarbonate powder and/or Sodium sulfite.

Example 6: The battery module according to any one of the preceding examples, wherein the liner material comprises a first layer and a second layer wherein the thermal runaway reaction inhibitors is arranged between the first and the second layer.

Example 7: The battery module according to any one of the preceding examples, wherein the liner material has a melting temperature of above 140°C.

Example 8: The battery module according to any one of the preceding examples, wherein the liner material is a continuous liner material extending over the two or more stacked battery cells in the cell stack.

Example 9: The battery module according to any one of the preceding examples, wherein the battery cells are prismatic battery cells.

Example 10: The battery module according to any one of examples 1 to 8, wherein the battery cells are cylindrical battery cells.

Example 11: The battery module according to any one of the preceding examples, wherein the battery cells are Lithium-ion cells.

Example 12: The battery module according to any one of the preceding examples, wherein the liner material is a nonwoven material or a woven material.

Example 13: The battery module according to any one of the preceding examples, wherein the liner material is arranged between a housing of the battery module and the venting area and/or cell tab on the respective first side of the battery cells.

Example 14: The battery module according to any one of the preceding examples, wherein a thermal control plate is arranged to abut the second side of the respective second side of the battery cells.

Example 15: The battery module according to example 14, wherein the thermal control plate is a liquid control plate.

Example 16: The battery module according to any one of the preceding examples, wherein the liner material is affixed to the cell stack.

Example 17: An electrical propulsion system comprising an electrical machine and a battery module according to any one of the preceding examples.

Example 18: A vehicle comprising a battery stack according to any one of examples 1 to 16 or an electrical propulsion system according to example 17.

Example 19: A stationary energy storing system comprising a battery module according to any one of examples 1 to 16.

Example 20: A marine vessel comprising a battery module according to any one of examples 1 to 16.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery module (1) comprising a cell stack (2), the cell stack (2) comprising two or more stacked battery cells (4), the two or more battery cells (4) comprising a first side (5) and a second side (6), the two or more battery cells (4) comprising a venting area (7) and/or a cell tab (8) on the respective first side (5), the cell stack (2) being provided with a thermal suppressant liner (9) arranged to cover the venting area (7) or the cell tab (8) on the respective first side (5) of the two or more battery cells (4), wherein the thermal suppressant liner (9) comprises a thermal runaway reaction inhibitor (10) embedded in a liner material (11).

2. The battery module (1) according to claim 1, wherein the thermal runaway reaction inhibitor (10) is an oxygen binding suppressor.

3. The battery module (1) according to claim 1 or 2, wherein the thermal runaway reaction inhibitor (10) has an activation temperature within the range of from 155 to 185°C.

4. The battery module (1) according to any one of claims 1 - 3, wherein the thermal runaway reaction inhibitor (10) is in powder form.

5. The battery module (1) according to any one of the preceding claims, wherein the thermal runaway reaction inhibitor (10) is any one of a silica-trifluoroacetyl powder, a powder of Mg(OH)₂, a bicarbonate powder and/or Sodium sulfite.

6. The battery module (1) according to any one of the preceding claims, wherein the liner material (11) comprises a first layer (11a) and a second layer (11b) and wherein the thermal runaway reaction inhibitor (10) is arranged between the first and the second layer (11a, 11b).

7. The battery module (1) according to any one of the preceding claims, wherein the liner material (11) has a melting temperature of 140°C or above.

8. The battery module (1) according to any one of the preceding claims, wherein the liner material (11) is a continuous liner material extending over the two or more of the stacked battery cells (4) of the cell stack (2).

9. The battery module (1) according to any one of the preceding claims, wherein the liner material (11) is a nonwoven material or a woven material.

10. The battery module (1) according to any one of the preceding claims, wherein a thermal control plate (12) is arranged to abut the second side (6) of the respective second side (6) of the battery cells (4).

11. The battery module (1) according to any one of the preceding claims, wherein the liner material (11) is affixed to the cell stack (2).

12. An electrical propulsion system (101) comprising an electrical machine (102) and a battery module (1) according to any one of the preceding claims.

13. A vehicle (100) comprising a battery module (1) according to any one of claims 1 to 11 or an electrical propulsion system (101) according to claim 12.

14. A stationary energy storing system comprising a battery module (1) according to any one of claims 1 to 11.

15. A marine vessel comprising a battery module (1) according to any one of claims 1 to 11.
